# EUROPEAN PATENT SPECIFICATION

(11) **EP 4 193 855 B1**
(45) Date of publication and mention of the grant of the patent: **11.11.2026**
(21) Application number: 21954524.1
(22) Date of filing: 25.08.2021
(51) Int. Cl.: A24F 40/53, A24F 40/46, A24D 1/20, A24F 40/20, H05B 6/80

(54) **AEROSOL GENERATION ASSEMBLY**
AEROSOLERZEUGUNGSEINHEIT
ASSEMBLAGE DE GÉNÉRATION D'AÉROSOLS

(43) Date of publication of application: 14.06.2023
(73) Proprietor: Shenzhen Smoore Technology Limited, Shenzhen, Guangdong 518102 (CN); Shenzhen Merit Technology Co., Ltd., Shenzhen, Guangdong 518000 (CN)
(72) Inventor: DU, Jing, Shenzhen, Guangdong 518102 (CN)
(74) Representative: Westphal, Mussgnug & Partner, Patentanwälte mbB
(86) International application number: PCT/CN2021/114594
(87) International publication number: WO 2023/023987

(56) References cited:
- EP-A1- 3 378 339
- WO-A1-2020/244996
- WO-A1-2021/123815
- CN-A- 103 315 405
- CN-A- 103 922 739
- CN-A- 107 624 040
- CN-A- 108 552 612
- CN-A- 110 652 038
- CN-A- 110 859 321
- CN-A- 112 931 980
- CN-B- 103 922 739
- US-B2- 10 517 329

## Description

### FIELD OF THE INVENTION

The present invention relates to the technical field of electronic atomization, and more particularly to an aerosol generation assembly and an aerosol generation system.

### DESCRIPTION OF THE RELATED ART

A heat-not-burning (HNB) device is a kind of electronic equipment that is used to heat, but not to burn, an aerosol generation substance (such as a product of processed plant leaves). The heat-not-burning device heats, at a high temperature, the aerosol generation substance to a temperature that can generate an aerosol, but is not sufficient to cause burning, so that, without being caused to burn, the aerosol generation substance generates an aerosol desired by a user.

The heat-not-burning devices that are currently available in the market generally adopts resistor heating means, namely a centered heating plate or a heating pin penetrates, at a center location of the aerosol generation substance, into the interior of the aerosol generation substance to proceed with heating. Such a device takes a long time to wait for preheating before use, making it hard to freely start or stop vaping, and the aerosol generation substance cannot be uniformly carbonized, leading to insufficient baking of the aerosol generation substance and low efficiency of utilization. Secondly, the heating plate of the HNB device may easily causes generation of contaminants, which are hard to cleanse, in an aerosol generation substance extractor and a heating plate holder, and a portion of the aerosol generation substance that is in contact with the heating body may get locally excessively high temperature, causing partial decomposition and releasing undesired substances. Thus, the resistor heating means is gradually replaced by microwave heating technology, which becomes a new solution of heating. The microwave heating technology has advantages in respect of high efficiency, timeliness, optionality, and non-delay heating, and is only effective of heating for specific substances having certain dielectric properties. Advantages of microwave heating-based atomization include: (a) instantaneous vaping or stopping being achievable as the microwave heating is radiation based heating, rather than heat conduction; (b) there being no plate breaking or heating plate cleansing issues as no heating plate is involved; and (c) the utilization efficiency of the aerosol generation substance being high and mouthfeel being consistent, and the mouthfeel being much closer to cigarettes.

However, the microwave-heating HNB devices that are currently available are incapable of identification of the aerosol generation substance, and it only applies one single way of heating to heat the aerosol generation substance. This results in an issue of poor atomization effect for different aerosol generation substances.

Publication EP 3 378 339 A1 discloses an electrically operated aerosol-generating system comprising an aerosol-generating article including at least one component incorporating a taggant within a material of the at least one component, wherein the taggant comprises an identifiable spectroscopic signature. The system also comprises a cavity for at least partially receiving the aerosol-generating article; and a detector capable of detecting the presence of the aerosol-generating article in the cavity and distinguishing the aerosol-generating article from other articles configured for use with the aerosol-generating system, based on the taggant incorporated within the material of the aerosol-generating article. Publication WO 2021/123815 A1 discloses an aerosol generating apparatus including a chamber configured to receive an article comprising an aerosolisable medium and a detection circuit configured to generate data indicative of the presence of an article comprising an aerosolisable medium within the chamber. Publication US 10 517 329 B2 discloses a smoking article includes a housing that has a mouthpiece and that is configured to receive an aerosol generating substrate. The smoking article also includes a sensor that is positioned at, for example, the mouthpiece and that is configured to detect an oronasal molecule of a prospective smoker of the article. Publication CN 103 922 739 B pertains to a radio frequency electronic label. Publication WO 2020/244996 A1 discloses a microwave heating unit configured for heating an aerosol-forming sample.

### SUMMARY OF THE INVENTION

The application aims to resolve one of the technical issues in the prior art or the related art. The problem underlying the present application is solved by an aerosol generation assembly having the features of claim 1.

In view of this, in a first aspect, an embodiment of the application provides an aerosol generation assembly which comprises an aerosol-forming substance section, which comprises a first packing layer and an aerosol-forming substance, the first packing layer forming a first cylinder, which is hollow, the aerosol-forming substance received in the first cylinder; and an identifier, which is fixed to the aerosol-forming substance section, the identifier made of a wave-transmitting material.

The aerosol generation assembly provided in the embodiment of the application comprises the aerosol-forming substance section and the identifier. The aerosol-forming substance section comprises the first packing layer and the aerosol-forming substance arranged inside the first packing layer. The first packing layer forms the first cylinder that is hollow, meaning the first packing layer is provided, in an interior thereof, with a cylindrical hollow cavity, and the aerosol-forming substance is disposed in the cylindrical hollow cavity. The aerosol-forming substance is arranged inside the first packing layer, which can effectively prevent the aerosol-forming substance from leaking out of the aerosol generation assembly.

Wherein, the aerosol generation assembly is used in combination with an aerosol generation device, and the aerosol generation device comprises a microwave assembly, an atomization chamber, and an opening. In the process of using the aerosol generation assembly, the aerosol-forming substance section is inserted through the opening into the atomization chamber, and the microwave assembly is operatable to heat the aerosol-forming substance received in the atomization chamber to generate an aerosol. The identifier is fixedly arranged at the aerosol-forming substance section, and during the process that the aerosol-forming substance is heated and atomized in the atomization chamber, the identifier is located inside the atomization chamber. Since the identifier is made of a wave-transmitting material, inserting the aerosol generation assembly that carries the identifier thereon into the atomization chamber would change a resonance frequency of inside the atomization chamber of the aerosol generation device.

The aerosol-forming substance uses tobacco or herbs as a raw material and is made into a substance of following various forms: pellet, flake, powder and chip, filament, paste, cake, porous aerogel, and capsule.

The aerosol-forming substance, after being heated to generate an aerosol, generates some wastes. By disposing the aerosol-forming substance inside the first packing layer, the wastes generated after the atomization of the aerosol-forming substance would remain inside the cylindrical hollow cavity of the first packing layer and does not fall into the atomization chamber of the aerosol generation device. In a process of exchanging the aerosol generation assembly, the wastes so generated can be easily collectively picked and handled.

It is noted that the aerosol-forming substance section of the aerosol generation assembly is provided with the identifier fixed thereto. When the aerosol generation assembly is assembled into the aerosol generation device, the identifier is located inside the atomization chamber. Arranging the identifier in the aerosol generation assembly could change the resonance frequency of inside the atomization chamber, allowing the resonance frequency of inside the atomization chamber to be set in a preset range. Before the aerosol generation device controls the microwave assembly to carry out microwave heating on the aerosol generation assembly, the microwave assembly carries out frequency scanning to determine an optimum operation frequency point of the microwave assembly, the optimum operation frequency point related to the resonance frequency of the atomization chamber, so as to identify a type of the aerosol generation assembly, and an appropriate operation mode corresponding to the type of the aerosol generation assembly can then be adopted to heat the aerosol-forming substance contained in the aerosol generation assembly to thereby improve the atomization efficiency of the aerosol generation device. This realizes the aerosol generation device being capable of identifying the type of the aerosol-forming substance contained in the aerosol generation assembly, and for different types, different heating modes corresponding thereto can be adopted. The effect of atomization that the aerosol generation device is applicable to a variety of types of the aerosol-forming substance is thus improved.

Specifically, according to different types of the aerosol-forming substance contained in the aerosol generation assembly, different identifiers can be arranged in the aerosol generation assembly, so that different ones of the aerosol generation assembly may correspond to different ones of the resonance frequency. Before the aerosol generation device carries out microwave heating on the aerosol-forming substance, the type of the aerosol generation assembly can be quickly identified by applying a frequency scanning operation.

Optionally, a corresponding relationship between the type of the aerosol generation assembly and the operation mode of the microwave assembly is stored in a processor of the aerosol generation assembly. After the aerosol generation assembly identifies the type of the aerosol generation assembly, a corresponding operation mode can be quickly found from the corresponding relationship. Thus, different modes of heating can be applied to different types of the aerosol-forming substance, allowing the aerosol generation device to accommodate various types of the aerosol generation assembly, and also, the atomization efficiency of the aerosol-forming substance is improved.

It is appreciated that by means of arranging the identifier in the aerosol-forming substance section of the aerosol generation assembly, it is possible to enable the aerosol generation device to identify the aerosol generation assembly. Therefore, it is possible to set the aerosol generation assembly within a preset resonance frequency range through selection of the identifier, and by setting an aerosol generation device to be only operable for implementing microwave heating on an aerosol generation assembly that is in the preset resonance frequency range, an effect of anticounterfeiting for the aerosol generation assembly is achieved.

Further, the aerosol generation assembly according to the above technical solution provided in the application may further comprise the following technical features:

In a feasible embodiment, the aerosol generation assembly further comprises: a filtration section, the filtration section comprising a second packing layer and a filter, the second packing layer forming a second cylinder that is hollow, the filter received in the second cylinder.

In the embodiment, the aerosol generation assembly further comprises the filtration section. When the aerosol generation assembly is inserted into the atomization chamber of the aerosol generation device, at least a portion of the filtration section is located outside the atomization chamber. Users use the filtration section of the aerosol generation assembly to vape the aerosol generated by heating of the aerosol-forming substance. The aerosol, after being generated from the aerosol-forming substance, flows through the filtration section to be filtered thereby.

The filtration section comprises the second packing layer and the filter. The second packing layer forms therein the second cylinder that is hollow, meaning the second packing layer is provided, in an interior thereof, with a cylindrical hollow cavity, and the filter is received in the cylindrical hollow cavity. The filter can filter the aerosol flowing therethrough.

In the above embodiment, the filter and the second packing layer can be optionally made of soft or flexible materials, to improve users' mouthfeel of vaping.

It is appreciated that gas permeability of the filter can be set according to practical needs. By setting the filtration portion with different properties of gas permeability, it is possible to suit users' different needs for vaping resistance.

Optionally, the second packing layer and the first packing layer are integrally formed, and the filter and the aerosol-forming substance are arranged in the integrally-formed first packing layer and second packing layer to complete the fabrication of the aerosol generation assembly. By arranging the first packing layer and the second packing layer as an integrally formed structure, a step of connecting the first packing layer and the second packing layer can be omitted, and the integrally-formed arrangement makes the characteristics of integer of the aerosol generation assembly better.

In a feasible arrangement, the filter contained in the filtration section and the aerosol-forming substance contained in the aerosol-forming substance section are in direct contact with each other.

In the arrangement, the filter and the aerosol-forming substance directly contact each other, and there is no hollow or void portion existing between the first packing layer and the second packing layer, so that an overall volume of the aerosol generation assembly can be reduced.

In a feasible embodiment, the filtration section further comprises a temperature dropping portion, the temperature dropping portion located between the filter and the aerosol-forming substance.

In the embodiment, the temperature dropping portion is arranged in the filtration section, and the temperature dropping portion is set at a location between the filter and the aerosol-forming substance. The temperature dropping portion helps lower down a temperature of the aerosol generated by atomization of the aerosol-forming substance induced by microwave heating, in order to prevent the aerosol at a high temperature from directly discharging from the vaping part to burn users.

Optionally, the temperature dropping portion is of a hollow cavity structure. The aerosol generated by atomization of the aerosol-forming substance induced by microwave heating enters the hollow cavity structure of the temperature dropping portion to be cooled down therein, and with vaping by users, the aerosol in the temperature dropping portion is caused to flow through the filter to discharge out of the aerosol generation assembly.

In a feasible embodiment, the identifier is arranged in an interior of the aerosol-forming substance, or the identifier is located between the first packing layer and the aerosol-forming substance.

In the embodiment, the identifier can be arranged inside the aerosol-forming substance, or the identifier can alternatively be arranged at a site between the aerosol-forming substance and the first packing layer. In the case that the identifier is arranged inside the aerosol-forming substance, the identifier can be selectively set at a middle portion, an upper portion, or a lower portion of the aerosol-forming substance. In the case that the identifier is arranged between the aerosol-forming substance and the first packing layer, the identifier can be selectively set on an upper portion, a middle portion, or a lower portion of an internal wall of the first packing layer. For the identifier set at different locations, the resonance frequency of the atomization chamber can also be different after the aerosol generation assembly is inserted into the atomization chamber. Through a suitable selection of the location where the identifier is set, it is possible to select and set the resonance frequency of the atomization chamber with the aerosol generation assembly inserted therein.

Optionally, identifiers that are identical are arranged in different aerosol generation assemblies and the identifiers are set at different locations, so that these different aerosol generation assemblies demonstrate different resonance frequencies. There is no need to additionally provide a variety of different identifiers in manufacturing the aerosol generation assembly, and by setting identifiers at different locations of aerosol generation assemblies, distinction of different aerosol generation assemblies can be achieved. This provides a high repetition rate of use for the parts and components of the aerosol generation assembly, and reduces the manufacturing cost. In a feasible embodiment, the identifier is set on an internal bottom wall of the first packing layer.

In the embodiment, the identifier is arranged at a location on the internal bottom wall of the first packing layer, namely the identifier is located between the first packing layer and the aerosol-forming substance, so that a contact area between the identifier and the aerosol-forming substance is reduced to prevent the identifier from causing influence on the atomization of the aerosol-forming substance.

In a feasible embodiment, the identifier is set on an external bottom wall of the first packing layer.

In the embodiment, by setting the identifier on the external bottom wall of the first packing layer, it is possible to prevent the identifier from directly contacting the aerosol-forming substance, so that the identifier is prevented from causing influence on the atomization of the aerosol-forming substance.

It is appreciated that the location of the identifier can be optionally set on the external wall of the first packing layer. A specific location includes, but is not limited to, the external bottom wall and the external sidewall of the first packing layer.

In a feasible embodiment, the number of the identifier is at least two, and the at least two identifiers comprise a first identifier and a second identifier;
the first identifier and the second identifier are both located inside the aerosol-forming substance; or
the first identifier is located inside the aerosol-forming substance, while the second identifier is located between the first packing layer and the aerosol-forming substance; or
the first identifier is located between the first packing layer and the aerosol-forming substance, while the second identifier is located inside the aerosol-forming sub stance; or
the first identifier located inside the receiving chamber, and the second identifier located outside the receiving chamber.

In the embodiment, the number of the identifier is multiple, and the multiple identifiers include the first identifier and the second identifier. By suitably arranging the locations where the first identifier and the second identifier are set, it is possible to heighten the efficiency of identification of the aerosol generation assembly in a frequency scanning process performed by a microwave assembly of an aerosol atomization device. Setting the number of the identifier to be multiple helps avoid a problem that the aerosol generation device fails to identify the aerosol generation assembly due to failure of one single identifier.

Optionally, the first identifier and the second identifier are both arranged inside the aerosol-forming substance, in order to improve the efficiency of identifying the aerosol generation assembly during the frequency scanning process performed by a microwave assembly of an aerosol atomization device.

In the above embodiment, the first identifier and the second identifier are arranged at intervals in an axial direction of the aerosol-forming substance section.

In the embodiment, in a process of disposing the aerosol generation assembly into the aerosol generation device, the aerosol-forming substance section is inserted, in axial direction, into the atomization chamber. By providing multiple identifiers inside the aerosol generation assembly, and arranging the first identifier and the second identifier of the multiple identifiers at intervals in the axial direction of the aerosol-forming substance section, it is possible to avoid a problem that the aerosol generation assembly cannot be identified aerosol-forming substance section due to an axial mounting error of the aerosol generation assembly.

By arranging the identifiers in an axial direction of aerosol-forming substance section., even users do not completely insert the aerosol forming substance section into the atomization chamber, it is still possible for the aerosol generation device to identify the aerosol generation assembly.

It is appreciated that due to the identifier arranged in the axial direction of aerosol-forming substance section., for different axial depths of insertion of the aerosol generation assembly into the atomization chamber, different resonance frequencies of the aerosol generation assembly can be set. By storing a corresponding relationship between the insertion depth of the aerosol generation assembly and the resonance frequency in a processor of the aerosol generation assembly, it is possible to make a detection of a status of the location of the aerosol generation assembly, and upon detecting the aerosol generation assembly not completely inserted into the atomization chamber, a reminder can be issued to users.

Optionally, the first identifier and the second identifier are both arranged between the first packing layer and the aerosol-forming substance.

In the above embodiment, the first identifier is arranged, at intervals, along an internal circumferential wall of the first packing layer.

In the embodiment, the number of the identifier in the aerosol generation assembly is multiple, and the first identifier and the second identifier of the multiple identifiers are arranged at intervals in the circumferential direction of the first packing layer, and the first identifier and the second identifier are both located between the first packing layer and the aerosol-forming substance, so that a problem that the aerosol generation assembly cannot be identified due to a circumferential assembling error of the aerosol generation assembly can be avoided.

Optionally, the first identifier is located between the first packing layer and the aerosol-forming substance, and the second identifier is located inside the aerosol-forming substance.

In the embodiment, by making the locations of the first identifier and the second identifier shifted from each other, it is possible to improve the efficiency of identifying the aerosol generation assembly that carries the identifiers during a frequency scanning process performed by the microwave assembly of the aerosol atomization device.

It is noted that arranging the multiple identifiers all inside the first packing layer can prevent an issue of wearing of the identifiers resulting from the identifiers directly exposed outside the aerosol generation assembly.

Optionally, the first identifier and the second identifier are both located on the external wall of the first packing layer.

In a feasible embodiment, the identifier has a shape that includes one or multiple ones of the following: prism, pyramid, cone, and sphere.

In the embodiment, in a manufacturing process of the identifier, the shape of the identifier can be properly set according to practical needs. The shape of the identifier includes, but is not limited to, a prism, a pyramid, a cone, and a sphere.

In a feasible embodiment, the identifier has a dielectric constant in a range of 10 to 100; and/or the identifier has a dielectric loss in a range of 0 to 0.1.

In the embodiment, the dielectric loss of the identifier is preferably in a range of 0 to 0.01, and the dielectric constant of the identifier is preferably in a range of 50 to 100. By specifically setting the ranges of dielectric loss and dielectric constant for the identifier, it is possible to achieve the identifier not overly absorbing microwave to ensure that the microwave generated by the microwave assembly can be all applied to the aerosol-forming substance, in order to prevent the identifier from influencing the atomization effect of the aerosol-forming substance.

In a feasible embodiment, the identifier comprises a dielectric ceramic material. The dielectric ceramic material includes one or a combination of the following: aluminum oxide, barium titanate, magnesium titanate, calcium titanate, strontium titanate, magnesium oxide, zirconium oxide, boron nitride, aluminum nitride, and rare earth mix-crystal series ceramics.

In the embodiment, the identifier comprises a dielectric ceramic material, and the dielectric ceramic material exhibits a higher electrical resistivity, a higher dielectric constant, and a lower dielectric loss. The identifier does not excessively absorb the microwave, so as to ensure that the microwave generated by the microwave assembly can all act on the aerosol-forming substance, and thus preventing the identifier from influencing the atomization effect of the aerosol-forming substance.

In the above, the dielectric ceramic material comprises one or a combination of the following: aluminum oxide, barium titanate, magnesium titanate, calcium titanate, strontium titanate, magnesium oxide, zirconium oxide, boron nitride, aluminum nitride, and rare earth mix-crystal series ceramic materials.

In the embodiment, the dielectric constant of aluminum oxide, barium titanate, magnesium titanate, calcium titanate, strontium titanate, magnesium oxide, zirconium oxide, boron nitride, and aluminum nitride are within a range from 30 to 40, and the dielectric constants of rare earth mix-crystal series ceramic materials are within a range from 70 to 90.

In preparing the identifier, one or multiple ones of the above materials can be selected to make the identifier, in order to adjust the dielectric constant of the identifier to make the dielectric constant of the identifier falling in an appropriate range.

In a second aspect, an embodiment of the application proposes an aerosol generation system which comprises an aerosol generation device, the aerosol generation device comprising an atomization chamber and a microwave assembly, the microwave assembly being operable to feed microwave into the atomization chamber; and the aerosol generation assembly according to any one of the feasible embodiments of the first aspect, at least a portion of the aerosol generation assembly located in the atomization chamber.

The embodiment of the application provides an aerosol generation system, and the aerosol generation system comprises an aerosol generation device and an aerosol generation assembly. The aerosol generation device comprises an opening, an atomization chamber, and a microwave assembly. The aerosol generation assembly is inserted through the opening into the atomization chamber. Before the aerosol generation device controls the microwave assembly to carry out microwave heating on the aerosol generation assembly, the microwave assembly first performs a frequency scanning operation to identify an optimum operation frequency point of the microwave assembly, the optimum operation frequency point related to a resonance frequency of the aerosol generation assembly contained in the atomization chamber, so as to identify a type of the aerosol generation assembly, and to set up an appropriate operation mode according to the type of the aerosol generation assembly to heat the aerosol-forming substance contained in the aerosol generation assembly, and thus, improving the atomization efficiency of the aerosol generation device. This realizes the aerosol generation device being capable of identifying the type of the aerosol-forming substance contained in the aerosol generation assembly and according to different ones of the type, heating modes set up to correspond thereto, to improve the effect of atomization for different types of aerosol-forming substance by the aerosol generation device.

Further, the aerosol generation system according the above technical solution provided in the application may further comprise the following technical features:

In a feasible embodiment, the atomization chamber comprises: a strong field zone. The identifier of the aerosol generation assembly is located in the strong field zone of the atomization chamber. The strong field zone is a microwave strong field zone formed with the microwave that is fed into the atomization chamber by the microwave assembly.

In the embodiment, the microwave assembly feeds the microwave into the atomization chamber, and the microwave transmits inside the atomization chamber. Being affected by the characteristics of transmission of the microwave, a strong field zone and a weak field zone are formed inside the atomization chamber. The aerosol-forming substance of the aerosol-forming substance section is arranged in the strong field zone of the atomization chamber, in order to ensure the atomization effect of the aerosol-forming substance induced by microwave heating. Thus, having the identifier also set in the strong field zone, which can ensure that the identifier is capable of causing an influence on the resonance frequency of the aerosol generation assembly.

In a feasible embodiment, the aerosol generation device further comprises: a housing, the atomization chamber arranged in the housing; and a resonance pillar, a first end of the resonance pillar connected to the chamber bottom wall of the atomization chamber, a second end of the resonance pillar arranged to correspond to the aerosol generation assembly.

In the embodiment, the resonance pillar is mounted inside the atomization chamber. The resonance pillar has a diameter that is less than a diameter of the atomization chamber, so that a gap is present between the external wall of the resonance pillar and the internal wall of the atomization chamber, the microwave being transmittable in such a gap. The resonance pillar can function as a conductor, and the resonance pillar may be made of a metallic material, and illustratively, the resonance pillar is made of copper, aluminum, iron, or an alloy thereof. The resonance pillar is configured to transmit the microwave and to increase the transmission speed of the microwave. The microwave does not readily deteriorate in transmitting in the atomization chamber, and the effect that the microwave acts on the aerosol-forming substance is improved, so that the microwave is acting on the aerosol-forming substance with a high efficiency and a fast speed to facilitate satisfaction of users' needs of use.

In a feasible embodiment, the microwave assembly comprises: a microwave lead-in section, which is arranged on the sidewall of the housing; a microwave emission source, which is connected to the microwave lead-in section. The microwave is outputted from the microwave emission source and fed through the microwave lead-in section into the atomization chamber, so that the microwave transmits in a direction from the first end of the resonance pillar toward the second end of the resonance pillar.

In the embodiment, the microwave emission source is operable to generate the microwave, and the microwave is transmitted through the microwave lead-in section into the interior of the atomization chamber. With the arrangement of the microwave lead-in section, the entry location of the microwave into the atomization chamber can be varied, so as to avoid components inside the atomization chamber, and also to ensure the microwave stably transmitting from the first end of the resonance pillar toward the second end of the resonance pillar.

Additional aspects and advantages of the application will become obvious from the following description section or can be appreciated through implementation of the application.

### BRIEF DESCRIPTION OF THE DRAWINGS

The above and/or additional aspects and advantages of the application will become clearer and readily understandable from the following description of embodiments, with reference to the attached drawings, in which:
FIG. 1 illustrates a first one of schematic structure diagrams showing aerosol generation assemblies according to a first embodiment of the application;
FIG. 2 illustrates a second one of schematic structure diagrams showing the aerosol generation assemblies according to the first embodiment of the application;
FIG. 3 illustrates a third one of schematic structure diagrams showing the aerosol generation assemblies according to the first embodiment of the application;
FIG. 4 illustrates a fourth one of schematic structure diagrams showing the aerosol generation assemblies according to the first embodiment of the application;
FIG. 5 illustrates a fifth one of schematic structure diagrams showing the aerosol generation assemblies according to the first embodiment of the application;
FIG. 6 illustrates a sixth one of schematic structure diagrams showing the aerosol generation assemblies according to the first embodiment of the application;
FIG. 7 illustrates a seventh one of schematic structure diagrams showing the aerosol generation assemblies according to the first embodiment of the application;
FIG. 8 illustrates an eighth one of schematic structure diagrams showing the aerosol generation assemblies according to the first embodiment of the application;
FIG. 9 illustrates a ninth one of schematic structure diagrams showing the aerosol generation assemblies according to the first embodiment of the application; and
FIG. 10 illustrates a schematic structure diagram showing an aerosol generation system according to a second embodiment of the application,
wherein a corresponding relationship between the reference signs adopted in FIGS. 1-10 and the parts is as follows:
100 aerosol generation assembly; 110 aerosol-forming substance section; 112 first packing layer; 114 aerosol-forming substance; 120 identifier; 122 first identifier; 124 second identifier; 130 filtration section; 132 second packing layer; 134 filter; 136 temperature dropping portion; 200 aerosol generation system; 210 aerosol generation device; 212 microwave assembly; 2122 microwave lead-in section; 2124 microwave emission source; 214 housing; 216 resonance pillar.

### DETAILED DESCRIPTION OF EMBODIMENTS

For better understanding of the above objectives, features, and advantages of the application, a detailed description of the application will be provided below with reference to the attached drawings and specific ways of embodiment. It is noted that without causing conflicts, embodiments of the application and features of the embodiments are combinable with each other.

The description provided below gives an explanation to a lot of specifics and details for the purposes of better understanding of the application. However, the application can also be implemented by adopting other ways that are not described herein. Thus, the scope of protection that the application pursues is not limited to the specific embodiments disclosed below.

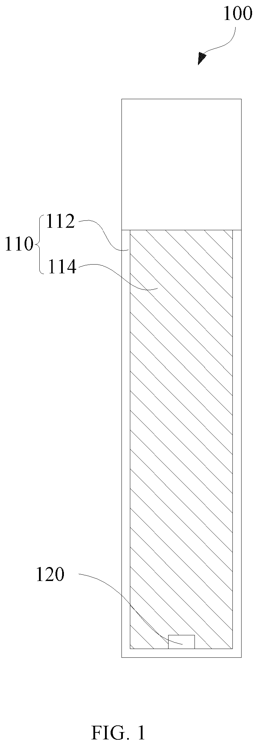

In the following, reference is made to FIGS. 1-10 for describing an aerosol generation assembly and an aerosol generation system according to some embodiments of the application.

### EMBODIMENT 1:

As shown in FIG. 1, the first embodiment of the application provides an aerosol generation assembly 100 which comprises: an aerosol-forming substance section 110 and an identifier 120.

In the above, the aerosol-forming substance section 110 comprises a first packing layer 112 and an aerosol-forming substance 114, the first packing layer 112 forming a first cylinder, which is hollow, the aerosol-forming substance 114 received in the first cylinder.

The identifier 120 is fixed to the aerosol-forming substance section 110, the identifier 120 made of a wave-transmitting material.

The aerosol generation assembly 100 provided in the embodiment of the application comprises the aerosol-forming substance section 110 and the identifier 120. The aerosol-forming substance section 110 comprises the first packing layer 112 and the aerosol-forming substance 114 arranged inside the first packing layer 112. The first packing layer 112 forms the first cylinder that is hollow, meaning the first packing layer 112 is provided, in an interior thereof, with a cylindrical hollow cavity, and the aerosol-forming substance 114 is disposed in the cylindrical hollow cavity. The aerosol-forming substance 114 is arranged inside the first packing layer 112, which can effectively prevent the aerosol-forming substance 114 from leaking out of the aerosol generation assembly 100.

In the above, the aerosol generation assembly 100 is used in combination with an aerosol generation device, and the aerosol generation device comprises a microwave assembly, an atomization chamber, and an opening. In the process of using the aerosol generation assembly 100, the aerosol-forming substance section 110 is inserted through the opening into the atomization chamber, and the microwave assembly is operated to heat the aerosol-forming substance 114 received in the atomization chamber to generate an aerosol. The identifier 120 is fixedly arranged in the aerosol-forming substance section 110, and during the process that the aerosol-forming substance 114 is heated and atomized in the atomization chamber, the identifier 120 is located inside the atomization chamber. Since the identifier 120 is made of a wave-transmitting material, inserting the aerosol generation assembly 100 that carries the identifier 120 thereon into the atomization chamber would change a resonance frequency internal of the atomization chamber of the aerosol generation device.

The aerosol-forming substance 114 uses tobacco or herbs as a raw material and is made into a substance of following various forms: pellet, flake, powder and chip, filament, paste, cake, porous aerogel, and capsule.

The aerosol-forming substance 114, after being heated to generate an aerosol, generates some wastes. By disposing the aerosol-forming substance 114 inside the first packing layer 112, the wastes generated after the atomization of the aerosol-forming substance 114 would remain inside the cylindrical hollow cavity of the first packing layer 112 and does not fall into the atomization chamber of the aerosol generation device. In a process of exchanging the aerosol generation assembly 100, the wastes so generated can be easily collectively picked and handled.

It is noted that the aerosol-forming substance section 110 of the aerosol generation assembly 100 is provided with the identifier 120 fixed thereto. When the aerosol generation assembly 100 is assembled into the aerosol generation device, the identifier 120 is located inside the atomization chamber. Arranging the identifier 120 on the aerosol generation assembly 100 could change the resonance frequency inside the atomization chamber, allowing the resonance frequency inside the atomization chamber to be set in a preset range. Before the aerosol generation device controls the microwave assembly to carry out microwave heating on the aerosol generation assembly 100, the microwave assembly carries out frequency scanning to determine an optimum operation frequency point of the microwave assembly, the optimum operation frequency point related to the resonance frequency inside the atomization chamber, so as to identify a type of the aerosol generation assembly 100, and an appropriate operation mode according to the type of the aerosol generation assembly 100 can then be adopted to heat the aerosol-forming substance 114 contained in the aerosol generation assembly 100 to thereby improve the atomization efficiency of the aerosol generation device. This realizes the aerosol generation device being capable of identifying the type of the aerosol-forming substance 114 contained in the aerosol generation assembly 100, and for different types, different heating modes corresponding thereto can be adopted. The effect of atomization that the aerosol generation device is applicable to a variety of types of the aerosol-forming substance 114 is thus improved.

Specifically, according to different types of the aerosol-forming substance 114 contained in the aerosol generation assembly 100, different identifiers 120 can be arranged in the aerosol generation assembly 100, so that different ones of the aerosol generation assembly 100 may correspond to different ones of the resonance frequency. Before the aerosol generation device carries out microwave heating on the aerosol-forming substance 114, the type of the aerosol generation assembly 100 can be quickly identified by applying a frequency scanning operation.

Optionally, a corresponding relationship between the type of the aerosol generation assembly 100 and the operation mode of the microwave assembly is stored in a processor of the aerosol generation assembly 100. After the aerosol generation assembly 100 identifies the type of the aerosol generation assembly 100, a corresponding operation mode can be quickly found from the corresponding relationship. Thus, different modes of heating can be applied to different types of the aerosol-forming substance 114, allowing the aerosol generation device to accommodate various types of the aerosol generation assembly 100, and also, the atomization efficiency of the aerosol-forming substance 114 is improved.

It is appreciated that by means of arranging the identifier 120 on the aerosol-forming substance section 110 of the aerosol generation assembly 100, it is possible to enable the aerosol generation device to identify the aerosol generation assembly 100. Therefore, it is possible to set the aerosol generation assembly 100 within a preset resonance frequency range through the identifier 120, and by setting an aerosol generation device to be only operable for implementing microwave heating on an aerosol generation assembly 100 that is in the preset resonance frequency range, an effect of anticounterfeiting for the aerosol generation assembly 100 is achieved.

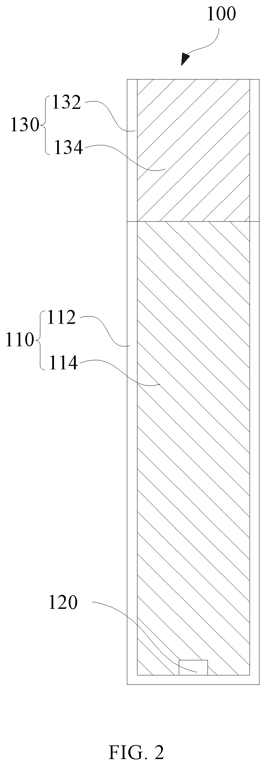

As shown in FIG. 2, in any one of the above embodiments, the aerosol generation assembly 100 further comprises:
a filtration section 130, the filtration section 130 comprising a second packing layer 132 and a filter 134, the second packing layer 132 forming a second cylinder that is hollow, the filter 134 received in the second cylinder.

In the embodiment, the aerosol generation assembly 100 further comprises the filtration section 130. When the aerosol generation assembly 100 is inserted into the atomization chamber of the aerosol generation device, at least a portion of the filtration section 130 is located outside the atomization chamber. Users use the filtration section 130 of the aerosol generation assembly 100 to vape the aerosol generated by heating of the aerosol-forming substance 114. The aerosol, after being generated from the aerosol-forming substance 114, flows through the filtration section 130 to be filtered thereby.

The filtration section 130 comprises the second packing layer 132 and the filter 134. The second packing layer 132 forms therein the second cylinder that is hollow, meaning the second packing layer 132 is provided, in an interior thereof, with a cylindrical hollow cavity, and the filter 134 is received in the cylindrical hollow cavity. The filter 134 can filter the aerosol flowing therethrough.

In the above, the filter 134 and the second packing layer 132 can be optionally made of soft or flexible materials, to improve users' mouthfeel of vaping.

It is appreciated that gas permeability of the filter 134 can be set according to practical needs. By setting the filter 134 with different gas permeability, it is possible to suit users' different needs for vaping resistance.

In some embodiments, the second packing layer 132 and the first packing layer 112 are integrally formed.

In these embodiments, the filter 134 and the aerosol-forming substance 114 are arranged in the integrally-formed first packing layer 112 and second packing layer 132 to complete the fabrication of the aerosol generation assembly 100. By arranging the first packing layer 112 and the second packing layer 132 as an integrally formed structure, a step of connecting the first packing layer 112 and the second packing layer 132 can be omitted, and the integrally-formed arrangement makes the characteristics of integer of the aerosol generation assembly 100 better.

In some embodiments, the filter 134 contained in the filtration section 130 and the aerosol-forming substance 114 contained in the aerosol-forming substance section 110 are in direct contact with each other.

In these embodiments, the filter 134 and the aerosol-forming substance 114 directly contact with each other, and there is no hollow or void portion existing between the first packing layer 112 and the second packing layer 132, so that an overall volume of the aerosol generation assembly 100 can be reduced.

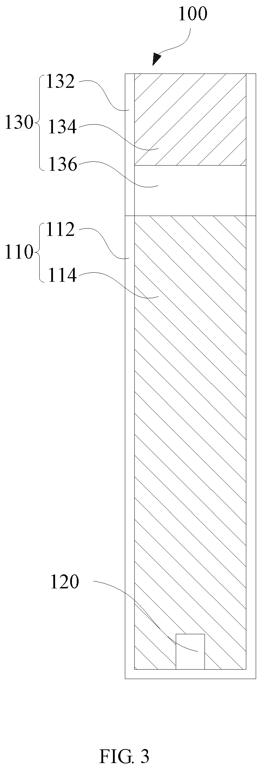

As shown in FIG. 3, in any one of the above embodiments, the filtration section 130 further comprises a temperature dropping portion 136, the temperature dropping portion 136 located between the filter 134 and the aerosol-forming substance 114.

In the embodiment, the temperature dropping portion 136 is arranged in the filtration section 130, and the temperature dropping portion 136 is set at a location between the filter 134 and the aerosol-forming substance 114. The temperature dropping portion 136 helps lower down a temperature of the aerosol generated by heating atomization of the aerosol-forming substance 114, in order to prevent the aerosol at a high temperature from directly discharging from the vaping part to burn users.

In some embodiments, the temperature dropping portion 136 is of a hollow cavity structure. The aerosol generated by heating atomization of the aerosol-forming substance 114 enters the hollow cavity structure of the temperature dropping portion 136 to get cooled down therein, and with vaping by users, the aerosol in the temperature dropping portion 136 is caused to flow through the filter 134 to discharge out of the aerosol generation assembly 100.

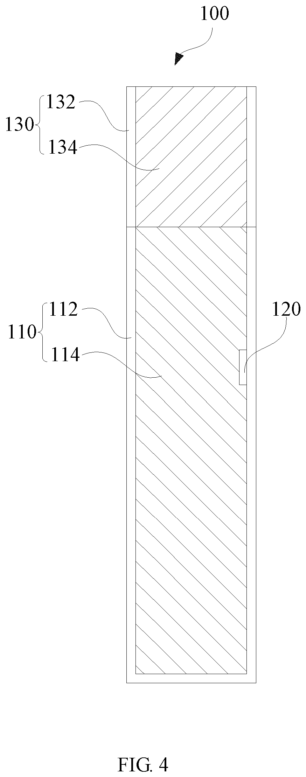

As shown in FIGS. 2 and 4, in any one of the above embodiments, the identifier 120 is arranged in an interior of the aerosol-forming substance 114, or the identifier 120 is located between the first packing layer 112 and the aerosol-forming substance 114.

In the embodiment, the identifier 120 can be arranged inside the aerosol-forming substance 114, or the identifier 120 can alternatively be arranged at a site between the aerosol-forming substance 114 and the first packing layer 112. In the case that the identifier 120 is arranged inside the aerosol-forming substance 114, the identifier 120 can be selectively set at a middle portion, an upper portion, or a lower portion of the aerosol-forming substance 114. In the case that the identifier 120 is arranged between the aerosol-forming substance 114 and the first packing layer 112, the identifier 120 can be selectively set on an upper portion, a middle portion, or a lower portion of an internal wall of the first packing layer 112. For the identifier 120 set at different locations, the resonance frequency of the atomization chamber can also be different after the aerosol generation assembly 100 is inserted into the atomization chamber. Through a suitable selection of the location where the identifier 120 is set, it is possible to select and set the resonance frequency of the atomization chamber with the aerosol generation assembly 100 inserted therein.

In some embodiments, identifiers 120 that are identical are arranged in different aerosol generation assemblies 100 and the identifiers 120 are set at different locations, so that these different aerosol generation assemblies 100 demonstrate different resonance frequencies. There is no need to additionally provide a variety of different identifiers 120 in manufacturing the aerosol generation assembly 100, and by setting identifiers 120 at different locations of aerosol generation assemblies 100, distinction of different aerosol generation assemblies 100 can be achieved. This provides a high repetition rate of use for the parts and components of the aerosol generation assembly 100, and reduces the manufacturing cost. In a feasible arrangement, the identifier 120 is set on an internal bottom wall of the first packing layer 112.

In the embodiment, the identifier 120 is arranged at a location on the internal bottom wall of the first packing layer 112, namely the identifier 120 is located between the first packing layer 112 and the aerosol-forming substance 114, so that a contact area between the identifier 120 and the aerosol-forming substance 114 is reduced to prevent the identifier 120 from causing influence on the atomization of the aerosol-forming substance 114.

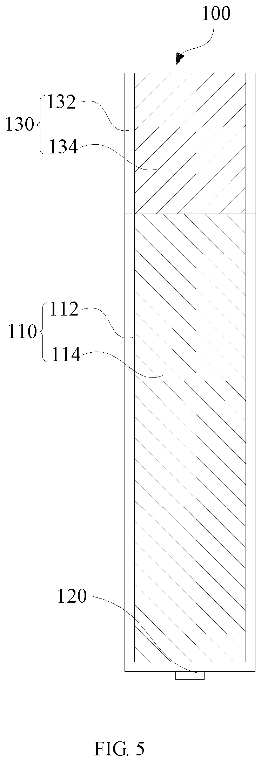

As shown in FIG. 5, in some embodiments, the identifier 120 is set on an external bottom wall of the first packing layer 112.

In the embodiment, by setting the identifier 120 on the external bottom wall of the first packing layer 112, it is possible to prevent the identifier 120 from directly contacting the aerosol-forming substance 114, so that the identifier 120 is prevented from causing influence on the atomization of the aerosol-forming substance 114.

It is appreciated that the location of the identifier 120 can be optionally set on the external wall of the first packing layer 112. A specific location includes, but is not limited to, the external bottom wall and the external sidewall of the first packing layer 112.

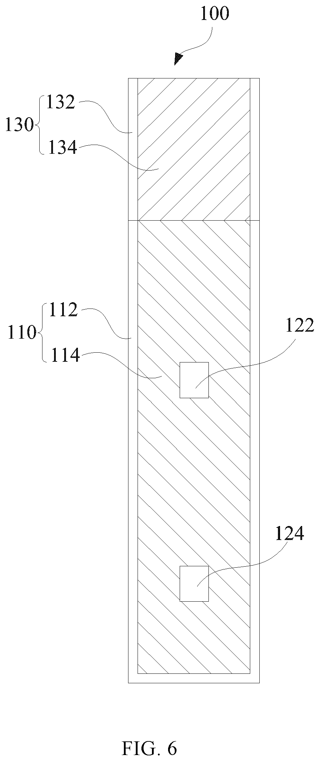

As shown in FIGS. 6, 7, 8, and 9, in any one of the above embodiments, the number of the identifier 120 is at least two, and the at least two identifiers 120 comprise a first identifier 122 and a second identifier 124.

The first identifier 122 and the second identifier 124 are both located inside the aerosol-forming substance 114; or, the first identifier 122 is located inside the aerosol-forming substance 114, while the second identifier 124 is located between the first packing layer 112 and the aerosol-forming substance 114; or, the first identifier 122 is located between the first packing layer 112 and the aerosol-forming substance 114, while the second identifier 124 is located inside the aerosol-forming substance 114, or, the first identifier 122 is located inside the receiving chamber, and the second identifier 124 is located outside the receiving chamber.

In the embodiment, the number of the identifier 120 is multiple, and the multiple identifiers 120 include the first identifier 122 and the second identifier 124. By suitably arranging the locations where the first identifier 122 and the second identifier 124 are set, it is possible to heighten the efficiency of identification of the aerosol generation assembly 100 in a frequency scanning process performed by a microwave assembly of an aerosol atomization device. Setting the number of the identifier 120 to be multiple helps avoid a problem that the aerosol generation device fails to identify the aerosol generation assembly 100 due to failure of one single identifier 120.

As shown in FIG. 6, in some embodiments, the first identifier 122 and the second identifier 124 are both arranged inside the aerosol-forming substance 114, in order to improve the efficiency of identifying the aerosol generation assembly 100 in the frequency scanning process performed by a microwave assembly of an aerosol atomization device.

In the above, the first identifier 122 and the second identifier 124 are arranged at intervals in an axial direction of the aerosol-forming substance section 110.

In these embodiments, in a process of disposing the aerosol generation assembly 100 into the aerosol generation device, the aerosol-forming substance section 110 is inserted, in the axial direction, into the atomization chamber. By providing multiple identifiers 120 inside the aerosol generation assembly 100, and arranging the first identifier 122 and the second identifier 124 of the multiple identifier 120 at intervals in the axial direction of the aerosol-forming substance section 110, it is possible to avoid a problem that the aerosol generation assembly 100 cannot be identified due to an axial mounting error of the aerosol generation assembly 100.

By arranging the identifiers 120 in the axial direction of the aerosol-forming substance section 110, even users do not completely insert the aerosol-forming substance section 110 into the atomization chamber, it is still possible for the aerosol generation device to identify the aerosol generation assembly 100.

It is appreciated that due to the identifier 120 arranged in the axial direction of the aerosol-forming substance section 110, for different axial depths of insertion of the aerosol generation assembly 100 into the atomization chamber, different resonance frequencies of the aerosol generation assembly 100 can be identified. By storing a corresponding relationship between the insertion depth of the aerosol generation assembly 100 and the resonance frequency in a processor of the aerosol generation assembly 100, it is possible to make a detection of a status of the location of the aerosol generation assembly 100, and upon detecting the aerosol generation assembly 100 not completely inserted into the atomization chamber, a reminder can be issued to users.

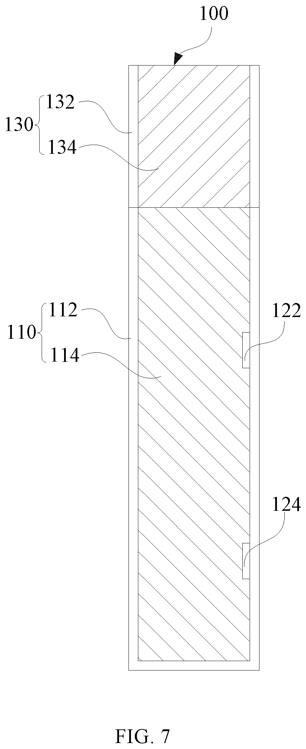

As shown in FIG. 7, in some embodiments, the first identifier 122 and the second identifier 124 are both arranged between the first packing layer 112 and the aerosol-forming substance 114.

In the above, the first identifier 122 are arranged, at intervals, along an internal circumferential wall of the first packing layer 112.

In these embodiments, the number of the identifier 120 in the aerosol generation assembly 100 is multiple, and the first identifier 122 and the second identifier 124 of the multiple identifiers 120 are arranged at intervals in the circumferential direction of the first packing layer 112, and the first identifier 122 and the second identifier 124 are both located between the first packing layer 112 and the aerosol-forming substance 114, so that a problem that the aerosol generation assembly 100 cannot be identified due to a circumferential assembling error of the aerosol generation assembly 100 can be avoided.

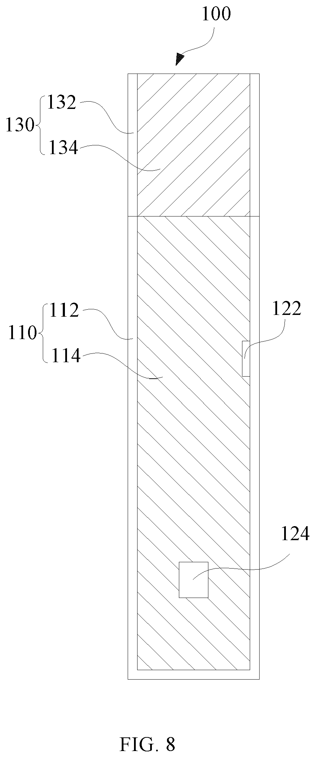

As shown in FIG. 8, in some embodiments, the first identifier 122 is located between the first packing layer 112 and the aerosol-forming substance 114, and the second identifier 124 is located inside the aerosol-forming substance 114.

In these embodiments, by making the locations of the first identifier 122 and the second identifier 124 shifted from each other, it is possible to improve the efficiency of identifying the aerosol generation assembly 100 that carries the identifiers 120 during a frequency scanning process performed by the microwave assembly of the aerosol atomization device.

It is noted that arranging the multiple identifiers 120 all inside the first packing layer 112 help avoid an issue of wearing of the identifiers 120 resulting from the identifiers 120 directly exposed outside the aerosol generation assembly 100.

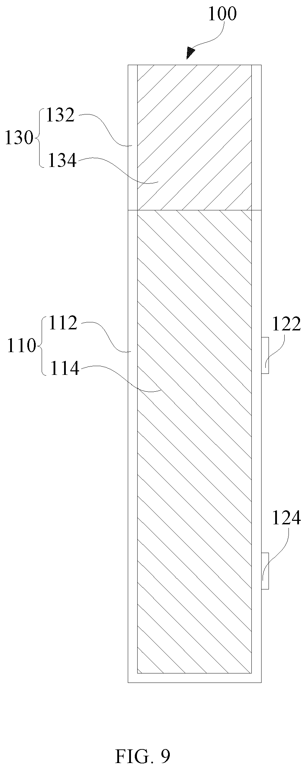

As shown in FIG. 9, in some embodiments, the first identifier 122 and the second identifier 124 are both located on an external wall of the first packing layer.

In some embodiments, the identifier 120 has a shape that includes one or more of the following: prism, pyramid, cone, and sphere.

In the embodiment, in a manufacturing process of the identifier 120, the shape of the identifier 120 can be properly set according to practical needs. The shape of the identifier 120 includes, but is not limited to, a prism, a pyramid,,a cone, and a sphere.

In any one of the above embodiments, the identifier 120 has a dielectric constant in a range of 10 to 100; and/or the identifier 120 has a dielectric loss in a range of 0 to 0.1.

In the embodiment, the dielectric loss of the identifier 120 is preferably in a range of 0 to 0.01, and the dielectric constant of the identifier 120 is preferably in a range of 50 to 100. By specifically setting the ranges of dielectric loss and dielectric constant for the identifier 120, it is possible to achieve the identifier 120 not overly absorbing microwave to ensure that the microwave generated by the microwave assembly can be all applied to the aerosol-forming substance 114, in order to prevent the identifier 120 from influencing the atomization effect of the aerosol-forming substance 114.

In any one of the above embodiments, the identifier 120 comprises a dielectric ceramic material. The dielectric ceramic material includes one or a combination of the following: aluminum oxide, barium titanate, magnesium titanate, calcium titanate, strontium titanate, magnesium oxide, zirconium oxide, boron nitride, aluminum nitride, and rare earth mix-crystal series ceramics.

In the embodiment, the identifier 120 comprises a dielectric ceramic material, and the dielectric ceramic material exhibits a higher electrical resistivity, a higher dielectric constant, and a lower dielectric loss, which make the identifier 120 not excessively absorb the microwave, so as to ensure that the microwave generated by the microwave assembly can all act on the aerosol-forming substance 114, and thus prevent the identifier 120 from influencing the atomization effect of the aerosol-forming substance 114.

In the above, the dielectric ceramic material comprises one or a combination of the following: aluminum oxide, barium titanate, magnesium titanate, calcium titanate, strontium titanate, magnesium oxide, zirconium oxide, boron nitride, aluminum nitride, and rare earth mix-crystal series ceramic materials.

The dielectric constants of aluminum oxide, barium titanate, magnesium titanate, calcium titanate, strontium titanate, magnesium oxide, zirconium oxide, boron nitride, and aluminum nitride are within a range from 30 to 40, and the dielectric constants of rare earth mix-crystal series ceramic materials are within a range from 70 to 90.

In preparing the identifier 120, one or multiple ones of the above materials can be selected to make the identifier 120, in order to adjust the dielectric constant of the identifier 120 to make the dielectric constant of the identifier 120 fall in an appropriate range.

### EMBODIMENT 2:

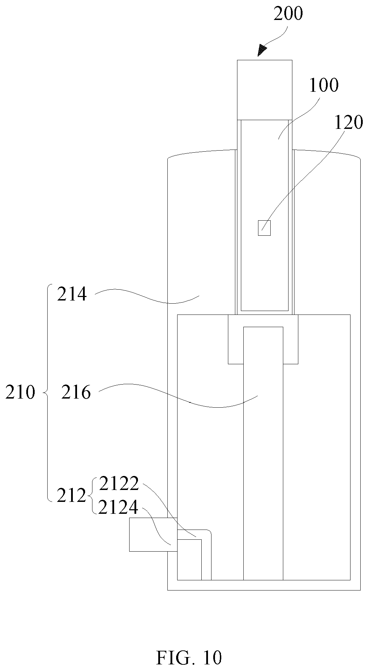

As shown in FIGS. 1 and 10, the second embodiment of the application provides an aerosol generation system 200, which comprises: an aerosol generation device 210 and an aerosol generation assembly 100.
wherein, the aerosol generation device 210 comprises an atomization chamber and a microwave assembly 212, the microwave assembly 212 configured to feed microwave into the atomization chamber; and
at least a portion of the aerosol generation assembly 100 is located in the atomization chamber, the aerosol generation assembly 100 being optionally the aerosol generation assembly 100 according to any of the above embodiments.

The embodiment of the application provides an aerosol generation system 200, and the aerosol generation system 200 comprises the aerosol generation device 210 and the aerosol generation assembly 100. The aerosol generation device 210 comprises an opening, an atomization chamber, and a microwave assembly 212. The aerosol generation assembly 100 is inserted through the opening into the atomization chamber. Before the aerosol generation device 210 controls the microwave assembly 212 to carry out microwave heating on the aerosol generation assembly 100, the microwave assembly 212 first performs a frequency scanning operation to identify an optimum operation frequency point of the microwave assembly 212, the optimum operation frequency point related to a resonance frequency of the aerosol generation assembly 100 contained in the atomization chamber, so as to identify a type of the aerosol generation assembly 100, and to set up an appropriate operation mode according to the type of the aerosol generation assembly 100 to heat the aerosol-forming substance contained in the aerosol generation assembly 100, and thus, improving the atomization efficiency of the aerosol generation device 210. This realizes the aerosol generation device 210 being capable of identifying the type of the aerosol-forming substance contained in the aerosol generation assembly 100 and for different types of the aerosol-forming substances, different heating modes corresponding thereto can be adopted, to improve the effect of atomization for different types of aerosol-forming substance by the aerosol generation device 210.

In any one of the above embodiments, the atomization chamber comprises: a strong field zone. The identifier 120 of the aerosol generation assembly 100 is located in the strong field zone of the atomization chamber. The strong field zone is a microwave strong field zone formed with the microwave that is fed into the atomization chamber by the microwave assembly 212.

In the embodiment, the microwave assembly 212 feeds the microwave into the atomization chamber, and the microwave transmits inside the atomization chamber. Being affected by the characteristics of transmission of the microwave, a strong field zone and a weak field zone are formed inside the atomization chamber. The aerosol-forming substance 114 of the aerosol-forming substance section 110 is arranged in the strong field zone of the atomization chamber, in order to ensure the atomization effect of the aerosol-forming substance 114 induced by microwave heating. Thus, having the identifier 120 also set in the strong field zone, which can ensure that the identifier 120 is capable of causing an influence on the resonance frequency of the aerosol generation assembly 100.

In any one of the above embodiments, the aerosol generation device 210 further comprises: a housing 214, the atomization chamber arranged in the housing 214; and a resonance pillar 216, a first end of the resonance pillar 216 connected to the chamber bottom wall of the atomization chamber, a second end of the resonance pillar 216 arranged to face the aerosol generation assembly 100.

In the embodiment, the resonance pillar 216 is mounted inside the atomization chamber. The resonance pillar 216 has a diameter that is less than a diameter of the atomization chamber, so that a gap is present between the external wall of the resonance pillar 216 and the internal wall of the atomization chamber, the microwave being transmittable in such the gap. The resonance pillar 216 may function as a conductor, and the resonance pillar 216 can be made of a metallic material, and illustratively, the resonance pillar 216 is made of copper, aluminum, iron, or an alloy thereof.

The resonance pillar 216 is configured to transmit the microwave and to increase the transmission speed of the microwave such that the microwave does not readily deteriorate during transmitting in the atomization chamber, and the effect that the microwave acts on the aerosol-forming substance 114 is improved, so that the microwave can act on the aerosol-forming substance 114 with a high efficiency and a fast speed to facilitate satisfaction of users' needs of use.

In any one of the above embodiments, the microwave assembly 212 comprises: a microwave lead-in section 2122, which is arranged on the sidewall of the housing 214; a microwave emission source 2124, which is connected to the microwave lead-in section 2122. The microwave is outputted from the microwave emission source 2124 and fed through the microwave lead-in section 2122 into the atomization chamber, so that the microwave transmits in a direction from the first end of the resonance pillar 216 toward the second end of the resonance pillar 216.

In the embodiment, the microwave emission source 2124 is operable to generate the microwave, and the microwave is transmitted through the microwave lead-in section 2122 into the interior of the atomization chamber. With the arrangement of the microwave lead-in section 2122, the entry location of the microwave into the atomization chamber can be varied, so as to avoid components inside the atomization chamber, and also to ensure the microwave stably transmitting from the first end of the resonance pillar 216 toward the second end of the resonance pillar 216.

It is to be noted that in the claims, the specification, and the drawings of the specification of the application, the term "multiple" indicates two or more than two, and unless otherwise and specifically indicated, the direction or positional relationship indicated by the terms "up" and "down", which is based on the direction or positional relationship shown in the drawings, is provided for easy illustration of the application and to make the description simple, and is not intended for suggesting or implying a device or a component indicated thereby must show the specific direction as described or must be constructed and operated in a specific direction. Thus, such descriptions should not be construed as limiting to the application. The terms "connecting", "mounting", and "fixing" should be should be interpreted in the broadest sense. For example, "connecting" can be fixedly connecting among multiple objects, and can also be detachably connecting among multiple objects, or integrally connected; and can be directly connecting among multiple objects, and can also be indirectly connecting by means of an intermediate medium among multiple objects. For those having ordinary skill in the art, the specific meanings of such terms as used in the application can be understood according to specific situations of the above context.

In the claims, the specification, and the drawings of the specification of the application, the terms "one embodiment", "some embodiments", and "specific embodiments" as used herein indicate a combination of specific characteristics, structures, materials, or features described in the embodiment or example is included in at least one embodiment or example of the application. In the claims, the specification, and the drawings of the specification of the application, an illustrative reference to the above terms does not suggest being applied to the same embodiment or example. Further, the description of the specific characteristics, structures, materials, or features can be combined, in any appropriate form, in any one or multiple embodiments or examples.

The description provided above illustrate only the preferred embodiments of the application and is not intended to limit the application. For artisans having ordinary skill, the application can be modified and varies in various ways. Thus, all modifications, equivalent substitutions, and improvements, which are made within the spirit and scope of the application should be construed falling within the scope of protection that the application pursues.

## Claims

1. An aerosol generation assembly, comprising:
an aerosol-forming substance section (110), which comprises a first packing layer (112) and an aerosol-forming substance (114), wherein the first packing layer (112) forms a first cylinder that is hollow, and the aerosol-forming substance (114) is received in the first cylinder; and
an identifier (120), which is fixed to the aerosol-forming substance section (110), wherein the identifier (120) is made of a microwave-transmitting material,
wherein the aerosol generation assembly is configured to be used in combination with an aerosol generation device (210), and the aerosol generation device (210) comprises a microwave assembly (212), an atomization chamber, and an opening; and
wherein, since the identifier is made of the microwave-transmitting material, when the aerosol generation assembly that carries the identifier (120) is inserted into the atomization chamber, a resonance frequency of inside the atomization chamber of the aerosol generation device changes.

2. The aerosol generation assembly according to claim 1, further comprising:
a filtration section (130), which comprises a second packing layer (132) and a filter (134), wherein the second packing layer (132) forms a second cylinder that is hollow, and the filter (134) is received in the second cylinder.

3. The aerosol generation assembly according to claim 1, wherein:
the identifier (120) is located inside the aerosol-forming substance (114), or the identifier (120) is located between the first packing layer (112) and the aerosol-forming substance (114).

4. The aerosol generation assembly according to claim 3, wherein:
the number of the identifier (120) is at least two, and the at least two identifiers (120) comprise a first identifier (122) and a second identifier (124); and
the first identifier (122) and the second identifier (124) are both located inside the aerosol-forming substance (114); or
the first identifier (122) is located inside the aerosol-forming substance (114), and the second identifier (124) is located between the first packing layer (112) and the aerosol-forming substance (114); or
the first identifier (122) is located between the first packing layer (112) and the aerosol-forming substance (114), and the second identifier (124) is located inside the aerosol-forming substance (114).

5. The aerosol generation assembly according to any of claims 1-4, wherein:
the dielectric constant of the identifier (120) is in a range from 10 to 100;
and/or
the dielectric loss of the identifier (120) is in a range from 0 to 0.1.

6. The aerosol generation assembly according to claim 5, wherein:
the identifier (120) comprises a dielectric ceramic material, and the dielectric ceramic material comprises one or a combination of the following: aluminum oxide, barium titanate, magnesium titanate, calcium titanate, strontium titanate, magnesium oxide, zirconium oxide, boron nitride, aluminum nitride, and rare earth mix-crystal series ceramics.

7. An aerosol generation system, comprising:
an aerosol generation device (210), comprising an atomization chamber and a microwave assembly (212), wherein the microwave assembly (212) is configured to feed microwave into the atomization chamber; and
the aerosol generation assembly (100) according to any of claims 1-6, wherein at least a portion of the aerosol generation assembly (100) is located in the atomization chamber.

8. The aerosol generation system according to claim 7, wherein the atomization chamber comprises:
a strong field zone, wherein the identifier (120) of the aerosol generation assembly (100) is located in the strong field zone of the atomization chamber, and the strong field zone is a strong field zone of microwave that is fed into the atomization chamber by the microwave assembly (212).

9. The aerosol generation system according to claim 7, wherein the aerosol generation device (210) comprises:
a housing (214), wherein the atomization chamber is arranged in the housing (214); and
a resonance pillar (216), wherein a first end of the resonance pillar (216) is connected to the chamber bottom wall of the atomization chamber, and a second end of the resonance pillar (216) is arranged to face the aerosol generation assembly (100).

10. The aerosol generation system according to claim 9, wherein the microwave assembly (212) comprises:
a microwave lead-in section (2122), arranged on the sidewall of the housing (214); and
a microwave emission source (2124), connected to the microwave lead-in section (2122), wherein the microwave is outputted from the microwave emission source (2124) and fed through the microwave lead-in section (2122) into the atomization chamber, the microwave transmits in a direction from the first end of the resonance pillar (216) toward the second end of the resonance pillar (216).

## Patentansprüche

1. Aerosolerzeugungseinheit, umfassend:
einen aerosolbildenden Substanzabschnitt (110), der eine erste Packungsschicht (112) und eine aerosolbildende Substanz (114) umfasst, wobei die erste Packungsschicht (112) einen ersten Zylinder bildet, der hohl ist, und die aerosolbildende Substanz (114) in dem ersten Zylinder aufgenommen ist; und
eine Kennung (120), die an dem aerosolbildenden Substanzabschnitt (110) befestigt ist, wobei die Kennung (120) aus einem mikrowellendurchlässigen Material hergestellt ist,
wobei die Aerosolerzeugungseinheit konfiguriert ist, in Kombination mit einer Aerosolerzeugungsvorrichtung (210) verwendet zu werden, und die Aerosolerzeugungsvorrichtung (210) eine Mikrowellenbaugruppe (212), eine Zerstäubungskammer und eine Öffnung umfasst; und
wobei, da die Kennung aus dem mikrowellendurchlässigen Material hergestellt ist, wenn
die Aerosolerzeugungseinheit, die die Kennung (120) trägt, in die Zerstäubungskammer eingeführt wird, sich eine Resonanzfrequenz im Inneren der Zerstäubungskammer der Aerosolerzeugungsvorrichtung ändert.

2. Aerosolerzeugungseinheit nach Anspruch 1, ferner umfassend:
einen Filtrationsabschnitt (130), der eine zweite Packungsschicht (132) und einen Filter (134) umfasst, wobei die zweite Packungsschicht (132) einen zweiten Zylinder bildet, der hohl ist, und der Filter (134) in dem zweiten Zylinder aufgenommen ist.

3. Aerosolerzeugungseinheit nach Anspruch 1, wobei:
sich die Kennung (120) innerhalb der aerosolbildenden Substanz (114) befindet, oder sich die Kennung (120) zwischen der ersten Packungsschicht (112) und der aerosolbildenden Substanz (114) befindet.

4. Aerosolerzeugungseinheit nach Anspruch 3, wobei:
die Anzahl der Kennungen (120) mindestens zwei beträgt, und die mindestens zwei Kennungen (120) eine erste Kennung (122) und eine zweite Kennung (124) umfassen; und
sich die erste Kennung (122) und die zweite Kennung (124) beide innerhalb der aerosolbildenden Substanz (114) befinden; oder
sich die erste Kennung (122) innerhalb der aerosolbildenden Substanz (114) befindet, und sich die zweite Kennung (124) zwischen der ersten Packungsschicht (112) und der aerosolbildenden Substanz (114) befindet; oder
sich die erste Kennung (122) zwischen der ersten Packungsschicht (112) und der aerosolbildenden Substanz (114) befindet, und sich die zweite Kennung (124) innerhalb der aerosolbildenden Substanz (114) befindet.

5. Aerosolerzeugungseinheit nach einem der Ansprüche 1-4, wobei:
die Dielektrizitätskonstante der Kennung (120) in einem Bereich von 10 bis 100 liegt; und/oder
der dielektrische Verlust der Kennung (120) in einem Bereich von 0 bis 0,1 liegt.

6. Aerosolerzeugungseinheit nach Anspruch 5, wobei:
die Kennung (120) ein dielektrisches Keramikmaterial umfasst, und das dielektrische Keramikmaterial eines oder eine Kombination der folgenden umfasst: Aluminiumoxid, Bariumtitanat, Magnesiumtitanat, Calciumtitanat, Strontiumtitanat, Magnesiumoxid, Zirkoniumoxid, Bornitrid, Aluminiumnitrid und Seltenerd-Mischkristall-Reihenkeramiken.

7. Aerosolerzeugungssystem, umfassend:
eine Aerosolerzeugungsvorrichtung (210), umfassend eine Zerstäubungskammer und eine Mikrowellenbaugruppe (212), wobei die Mikrowellenbaugruppe (212) konfiguriert ist, Mikrowellen in die Zerstäubungskammer einzuspeisen; und
die Aerosolerzeugungseinheit (100) nach einem der Ansprüche 1-6, wobei sich mindestens ein Teil der Aerosolerzeugungseinheit (100) in der Zerstäubungskammer befindet.

8. Aerosolerzeugungssystem nach Anspruch 7, wobei die Zerstäubungskammer Folgendes umfasst:
eine Starkfeldzone, wobei sich die Kennung (120) der Aerosolerzeugungseinheit (100) in der Starkfeldzone der Zerstäubungskammer befindet, und die Starkfeldzone eine Starkfeldzone von Mikrowellen ist, die in die Zerstäubungskammer durch die Mikrowellenbaugruppe (212) eingespeist werden.

9. Aerosolerzeugungssystem nach Anspruch 7, wobei die Aerosolerzeugungsvorrichtung (210) Folgendes umfasst:
ein Gehäuse (214), wobei die Zerstäubungskammer in dem Gehäuse (214) angeordnet ist; und
eine Resonanzsäule (216), wobei ein erstes Ende der Resonanzsäule (216) mit der Kammerbodenwand der Zerstäubungskammer verbunden ist, und ein zweites Ende der Resonanzsäule (216) so angeordnet ist, dass es der Aerosolerzeugungseinheit (100) zugewandt ist.

10. Aerosolerzeugungssystem nach Anspruch 9, wobei die Mikrowellenbaugruppe (212) umfasst:
einen Mikrowelleneinführungsabschnitt (2122), der an der Seitenwand des Gehäuses (214) angeordnet ist; und
eine Mikrowellenemissionsquelle (2124), die mit dem Mikrowelleneinführungsabschnitt (2122) verbunden ist, wobei die Mikrowelle von der Mikrowellenemissionsquelle (2124) ausgegeben und durch den Mikrowelleneinführungsabschnitt (2122) in die Zerstäubungskammer eingespeist wird, die Mikrowelle sich in einer Richtung von dem ersten Ende der Resonanzsäule (216) zu dem zweiten Ende der Resonanzsäule (216) ausbreitet.

## Revendications

1. Ensemble de génération d'aérosol, comprenant :
une section de substance aérosolisante (110), qui comprend une première couche de garnissage (112) et une substance aérosolisante (114), dans lequel la première couche de garnissage (112) forme un premier cylindre creux, et la substance aérosolisante (114) est reçue dans le premier cylindre ; et
un identifiant (120), qui est fixé à la section de substance aérosolisante (110), dans lequel l'identifiant (120) est constitué d'un matériau transmettant les micro-ondes,
dans lequel l'ensemble de génération d'aérosol est configuré pour être utilisé en combinaison avec un dispositif de génération d'aérosol (210), et le dispositif de génération d'aérosol (210) comprend un ensemble micro-ondes (212), une chambre d'atomisation et une ouverture ; et
dans lequel, puisque l'identifiant est constitué du matériau transmettant les micro-ondes, lorsque l'ensemble de génération d'aérosol qui porte l'identifiant (120) est inséré dans la chambre d'atomisation, une fréquence de résonance à l'intérieur de la chambre d'atomisation du dispositif de génération d'aérosol change.

2. Ensemble de génération d'aérosol selon la revendication 1, comprenant en outre :
une section de filtration (130), qui comprend une seconde couche de garnissage (132) et un filtre (134), dans lequel la seconde couche de garnissage (132) forme un second cylindre creux, et le filtre (134) est reçu dans le second cylindre.

3. Ensemble de génération d'aérosol selon la revendication 1, dans lequel :
l'identifiant (120) est situé à l'intérieur de la substance aérosolisante (114), ou l'identifiant (120) est situé entre la première couche de garnissage (112) et la substance aérosolisante (114).

4. Ensemble de génération d'aérosol selon la revendication 3, dans lequel :
le nombre d'identifiants (120) est d'au moins deux, et les au moins deux identifiants (120) comprennent un premier identifiant (122) et un second identifiant (124) ; et
le premier identifiant (122) et le second identifiant (124) sont tous deux situés à l'intérieur de la substance aérosolisante (114) ; ou
le premier identifiant (122) est situé à l'intérieur de la substance aérosolisante (114), et le second identifiant (124) est situé entre la première couche de garnissage (112) et la substance aérosolisante (114) ; ou
le premier identifiant (122) est situé entre la première couche de garnissage (112) et la substance aérosolisante (114), et le second identifiant (124) est situé à l'intérieur de substance aérosolisante (114).

5. Ensemble de génération d'aérosol selon l'une quelconque des revendications 1 à 4, dans lequel :
la constante diélectrique de l'identifiant (120) est comprise entre 10 et 100 ; et/ou
la perte diélectrique de l'identifiant (120) est comprise entre 0 et 0,1.

6. Ensemble de génération d'aérosol selon la revendication 5, dans lequel :
l'identifiant (120) comprend un matériau céramique diélectrique, et le matériau céramique diélectrique comprend un ou une combinaison des éléments suivants : oxyde d'aluminium, titanate de baryum, titanate de magnésium, titanate de calcium, titanate de strontium, oxyde de magnésium, oxyde de zirconium, nitrure de bore, nitrure d'aluminium et céramiques à base de cristaux mixtes de terres rares.

7. Système de génération d'aérosol, comprenant :
un dispositif de génération d'aérosol (210), comprenant une chambre d'atomisation et un ensemble micro-ondes (212), dans lequel l'ensemble micro-ondes (212) est configuré pour alimenter la chambre d'atomisation en micro-ondes ; et
l'ensemble de génération d'aérosol (100) selon l'une quelconque des revendications 1 à 6, dans lequel au moins une partie de l'ensemble de génération d'aérosol (100) est située dans la chambre d'atomisation.

8. Système de génération d'aérosol selon la revendication 7, dans lequel la chambre d'atomisation comprend :
une zone de champ fort, dans lequel l'identifiant (120) de l'ensemble de génération d'aérosol (100) est situé dans la zone de champ fort de la chambre d'atomisation, et la zone de champ fort est une zone de champ fort de micro-ondes qui est alimentée dans la chambre d'atomisation par l'ensemble micro-ondes (212).

9. Système de génération d'aérosol selon la revendication 7, dans lequel le dispositif de génération d'aérosol (210) comprend :
un boîtier (214), dans lequel la chambre d'atomisation est disposée dans le boîtier (214) ; et
un pilier de résonance (216), dans lequel une première extrémité du pilier de résonance (216) est reliée à la paroi inférieure de la chambre d'atomisation, et une seconde extrémité du pilier de résonance (216) est disposée de manière à faire face à l'ensemble de génération d'aérosol (100).

10. Système de génération d'aérosol selon la revendication 9, dans lequel l'ensemble micro-ondes (212) comprend :
une section d'entrée des micro-ondes (2122), disposée dans la paroi latérale du boîtier (214) ; et
une source d'émission de micro-ondes (2124), reliée à la section d'entrée de micro-ondes (2122), dans lequel les micro-ondes émises par la source d'émission micro-ondes (2124) sont acheminées à travers la section d'entrée des micro-ondes (2122) dans la chambre d'atomisation, de sorte que les micro-ondes se transmettent dans la direction allant de la première extrémité du pilier de résonance (216) vers la seconde extrémité du pilier de résonance (216).
